# EUROPEAN PATENT SPECIFICATION

(11) **EP 1 952 735 B1**
(45) Date of publication and mention of the grant of the patent: **02.06.2010**
(21) Application number: 07024506.3
(22) Date of filing: 18.12.2007
(51) Int. Cl.: A47J 36/02

(54) **Induction cookware**
Induktionskochgeschirr
Appareil de cuisson à induction

(30) Priority: 19.12.2006 US 612676
(43) Date of publication of application: 06.08.2008
(73) Proprietor: Meyer Intellectual Properties Limited, Kowloon Hong Kong (CN)
(72) Inventor: Cheng, Stanley Kin-Sui, Vallejo CA 94590 (US); Chan, Mang Hung, Chonburi (TH)
(74) Representative: Teasdale, Nicola Joanne

(56) References cited:
- EP-A- 0 568 322
- EP-A- 0 928 587
- EP-A- 1 172 053
- WO-A-87/04911
- DE-U1-202006 002 366
- FR-A- 2 897 251
- US-A- 5 506 062
- US-A- 5 827 573

## Description

The present invention relates to cookware vessels and in particular to aluminium cookware suitable for use with induction cooking methods.

Cookware vessels have been fabricated from a variety metals, including laminations of different metals to provide selected improvements in at least one of strength, thermal conductivity, weight, and durability among other properties, without detriment to the other properties.

Induction cooking is now in common use and gaining in popularity because it is fast, energy efficient and safer to use, in that the cook is not exposed to an open flame or hot electric heating element. For induction cooking a usually ferromagnetic or ferromagnetic-coated cookware vessel is placed on top of a support surface on the range or stovetop. The supporting surface usually consists of a plate of dielectric material, such as glass or glass-ceramic. An induction coil disposed beneath the support surface is in effect the heating element. The induction heating element is a conductive electric coil usually sealed and isolated from the support surface of the cookware. The AC current in the coil produces eddy currents within the ferromagnetic material in the cookware vessel. These eddy currents within the ferromagnetic portion of the cookware vessel create heat from the resistance of the metal because of induction. This heats the remainder of the cookware vessel, but no heat is generated from the actual range or stovetop. Various US patents teach the desirability of particular materials and constructions that include one or more metals that act as a receiver of the energy from the coil, with other materials of construction improving heat transfer or imparting other physical properties to the cookware vessel. These include: US 3,966,426 to McCoy, et al. (issued 07-29-1976); US 4,544,818 to Minamida (issued10-01-1985); US 4,646,935 to Ulam (issued 03-03-1987); US 4,705,727 to Hunter (issued 11-10-1987); US 5,952,112 to Spring (issued 09-14-1999) and US 6,926,971 to Groll (issued 08-09-2005).

Aluminium cookware, and in particular anodized aluminium cookware, has become popular because it is light in weight, compared to steel or iron cookware. The anodized finish provides an alumina or ceramic like aluminium oxide coating that is harder and hence more scratch resistant that the unprotected aluminium metal.

For example, in EP 0928 587 there is disclosed an article of cookware which comprises a body having a base region that is at least partly formed of aluminium or aluminium alloy having a steel cap secured thereto by an impact bonding process through an intermediate aluminium or aluminium alloy plate. However, aluminium cookware has several disadvantages. As aluminium is not ferromagnetic, it cannot be used alone on induction cooking ranges. Although the alumina that forms the anodized finish is hard it has inherent chemical properties, which under certain circumstances, can lead to disadvantages for some consumers. For example, an anodized aluminium finish stains more readily from acidic foods than other cookware finishes. Such stains or attacks to the hard alumina coating are more visible on the surrounding black or grey matte surface. Further, it can be more difficult to clean cooking residue that would not even stain the anodized aluminium in comparison to other cookware finishes. In addition, all types of anodized aluminium are susceptible to damage and staining from some type of dishwasher detergent, which being highly alkaline will react with the alumina coating. Non-stick organic coatings have been used on the interior of hard-anodized aluminium cookware. Various US patents teach compositions of matter and methods of applying organic based and non-stick coatings to cookware vessels. These include US 3,986,993 to Vassiliou (issued 10-19-1976); US 4,118,537 to Vary, et al. (issued 10-03-1978); US 4,321,177 to Wilkinson (issued 03-23-1982); US 5,691,067 to Patel (issued 10-25-1997) and US 6,133,359 to Bate, et al. (issued 10-17-2000).

While organic based and non-stick coatings on the interior of anodized aluminium cookware will provide resistance to attack by dishwasher detergents, the exterior anodized surface will remain susceptible to attack and staining. In fact, from an aesthetic standpoint staining on the exterior of the cookware may be more of a problem for some consumers than staining of an otherwise functional interior cookware surface.

Although numerous patents disclose various methods of attaching or embedding at least a portion of a ferromagnetic layer at the bottom of a cookware article, none is truly compatible for use with anodized aluminium cookware.

It is a general objective of the present invention to provide improved lightweight aluminium cookware compatible with induction ranges.

Another object of the invention to provide a method and process for applying a stainless steel cap to the bottom of anodized aluminium cookware.

It is another object of the invention to provide such anodized aluminium cookware that it safe to clean in dishwashers with any variety of detergent.

### Summary of Invention

It would be desirable to have anodized aluminium cookware that could be used on induction stoves. Anodized cookware has a hard surface and is thus more durable and scratch resistant than metal cookware. Further, anodized cookware having a harder surface, results in greater durability of any non-stick coating used on the interior. However, prior to the current invention anodized cookware is generally not cleanable in automatic dishwashers unless certain detergents are used. It would be desirable to utilize an organic non-stick coating on the exterior, as well as the interior of anodized aluminium cookware to provide for easier clean up and protect the anodized coating from dishwasher detergents. However, the currently known and available non-stick coatings could be damaged by the heat inherent in the cooking process if used on the exterior surface of prior art cookware.

In the present invention, the above and other deficiencies in the prior art are overcome by providing an aluminium article of cookware wherein a principle thermal mass for heat transfer to the foodstuffs is situated between the inside and the outside bottom of the cookware article, being surrounded preferably by a stainless steel cap. The cap comprises at least one ferromagnetic material and is affixed to the aluminium cookware vessel such that it can be used on an induction cooking range. The cap, usually stainless steel, is laminated to the bottom of an aluminium shell to incorporate a thick plate of a thermally conductive material and form the cookware vessel. This thick plate then acts as the principle thermal mass. In particular, the stainless steel cap acts as a resting base for the cookware vessel as it surrounds this now embedded thermal mass. The stainless steel construction of the cap provides the inherent advantage that it is easy to clean and does not stain, and hence will not need the non-stick coating that protects other portions of the cookware article. Thus, an organic non-stick coating can be used to protect the otherwise exposed exterior anodized finish of an aluminium cookware article from staining and chemical attack, rendering it easier to clean. This construction limits the potential for the undesirable overheating of exterior surface that might be protected by an organic coating, such as a non-stick coating.

Further, when the interior and exterior surfaces of the aluminium portions of the cookware are also anodized, the organic coatings protect the anodized finish from attack by dishwasher detergents, thus rendering the cookware both suitable for induction cooking and dishwasher cleaning.

The above and other objects, effects, features, and advantages of the present invention will become more apparent from the following description of the embodiments thereof taken in conjunction with the accompanying drawings.

Therefore according to a first aspect of the present invention there is provided an article of cookware (100) comprising:
a) an aluminium shell (130) having a bottom cooking surface and surrounding sidewalls extending substantially upward therefrom to define a fluid retaining cavity having an interior surface and an exterior surface,
b) a plate of thermally conductive material (116) that comprises aluminium bonded to the exterior of the bottom cooking surface, said thermally conductive material being at least as thermally conductive as the material that forms said shell, and
c) a stainless steel cap (115) disposed in thermal communication and surrounding said plate of thermally conductive material (116), the edge of said cap extending to the exterior of the bottom cooking surface, wherein the interior surface and exterior surface of the aluminium shell not covered by the stainless steel cap is anodized; and
d) an organic coating (150) substantially covering the anodized interior surface and exterior surface of the aluminium shell (130) not covered by the stainless steel cap and not covered by said plate of thermally conductive material (116).

The article of cookware according to present invention further comprises a cap disposed in thermal communication and surrounding said plate of thermally conductive material, the edge of said cap extending to the exterior of the bottom cooking surface.

At least one of said cap and said plate of thermally conductive material is preferably comprised of a ferromagnetic material. Preferably the cap is less thermally conductive than said plate of thermally conductive material. The cap is further preferably comprised of stainless steel.

Also in accordance with the first aspect of the present invention said thermally conductive material preferably comprises aluminium, or said thermally conductive material comprises at least one of aluminium or copper. Furthermore, said shell comprises aluminium or an alloy thereof. When the shell is aluminium it is preferably anodized on at least one of the interior or exterior surface.

The organic coating of the cookware is preferably a protective non-stick coating.

In addition, the stainless steel that comprises said cap comprises a thickness of less than about 1 mm.

Alternatively, the thermally conductive material consists essentially of aluminium.

In preferred articles of cookware of the present invention the thermally conductive aluminium plate surrounded by said cap has a thickness of at least about 2 mm, more preferably the thermally conductive aluminium plate surrounded by said cap has a thickness of at least about 5 mm and most preferably the thermally conductive aluminium plate surrounded by said cap has a thickness of at least about 7 mm.

It is also preferred that the combined thickness of said thermally conductive aluminium plate and said aluminium shell at the bottom cooking surface is at least about two times the thickness of said aluminium shell or alternatively, the combined thickness of said thermally conductive aluminium plate and said aluminium shell at the bottom cooking surface is at least about three times the thickness of said aluminium shell.

Articles of cookware according to the present invention may further comprises at least one layer of a magnetic material beneath the interior bottom cooking surface of said shell. The magnetic material comprises a grating structure and the grating structure comprises holes and wherein the holes further comprise protrusions that penetrate at least one of the surrounding materials to mechanically interlock therewith.

### Brief Description of the Drawings

FIG. 1 is a cross-sectional elevation showing an embodiment not covered by the invention.
FIG. 2 is a cross-sectional elevation showing an embodiment of the invention.
FIG. 3 is a cross-sectional elevation showing an embodiment not covered by the invention.
FIG. 4 is a cross-sectional elevation showing an embodiment not covered by the invention.
FIG. 5 is a cross-sectional elevation showing an embodiment not covered by the invention.

### Detailed Description

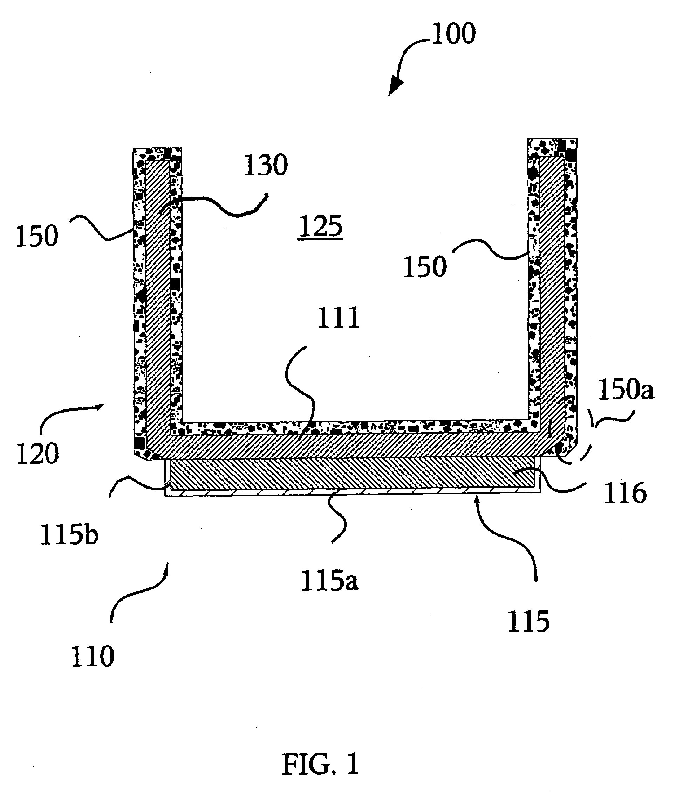

Referring to FIGS. 1 through 5, wherein like reference numerals refer to like components in the various views, there are illustrated therein new and improved aluminium cookware vessels for induction cooking, generally denominated 100 herein. It is to be understood that the relative size, shape and thickness of the components shown in these drawings are not intended to represent the actual configurations, but rather are to simplify the drawings to provide a better understanding of the invention.

The article of cookware 100 is a fluid containing cooking vessel having a bottom portion 110 surrounded by substantially vertically extending sidewalls 120 to define a fluid retaining interior cavity 125. In this first embodiment of FIG. 1 the outer bottom surface of the article of cookware 100 has a steel cap 115. The steel cap encloses at least one layer of thermally conductive material 116.

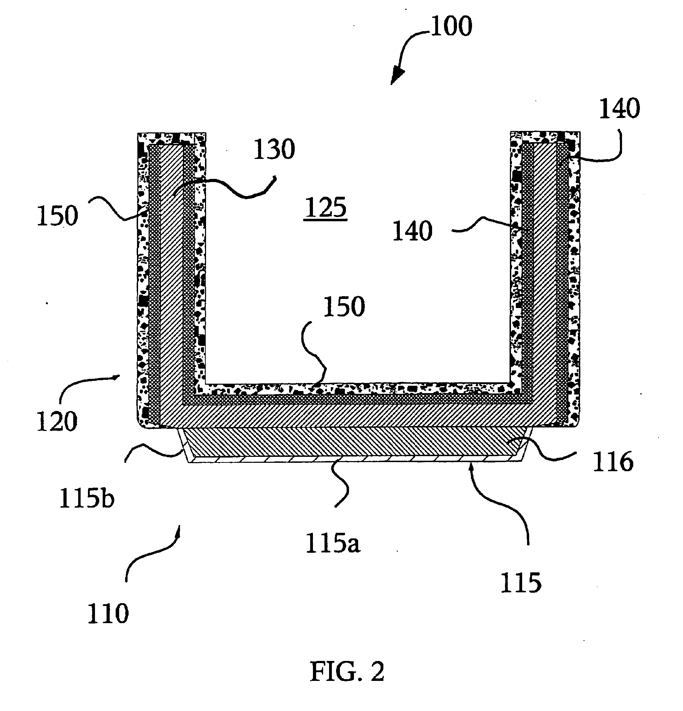

The steel cap 115 has a bottom horizontal surface 115a and relatively short upward extending side surfaces 115b that surround the thermally conductive material 116. The steel cap is preferably stainless steel having a thickness of about 0.5 to 1.0 mm. It should be appreciated that while stainless steel is preferred for its corrosion resistance, ferromagnetic grades are more preferred as they act as a receptor for induction cooking. Thus, other metals and alloys with similar properties may be substituted. Thus, to the extent that the material used to form cap 115 is not stainless steel, or a combination of stainless steel and other materials, the preferred thickness may differ to optimize the effectiveness as a receptor of energy in induction cooking. The steel cap 115 may have beveled side surfaces 115b, as shown in FIG. 2, or substantially vertical side surfaces as shown in the other figures, as well as other side profile shapes. The height or depth of the steel cap 115 is sufficient to contain the thermally conductive material 116. The optimum dimensions of the thermally conductive material(s) are selected relative to the other dimensions of the cookware article so that it acts as the principle thermal mass, drawing heat from or through the cap to the fluid retaining interior cavity and the foodstuffs contained therein. Thus, optimizing the dimension of the thermally conductive materials prevents excess heating of the exterior portion of the sidewalls 120 adjacent cap 115.

Further, the article of cookware 100 in FIG. 1, as well as other embodiments, also has an organic coating, but preferably a non-stick coating, 150 covering the exposed surfaces of aluminium shell 130 to facilitate clean up after use. The potential for overheating, and thus degrading, the non-stick coating on the exterior of the cookware article 100 is greatly reduced due to the inclusion of the thermally conductive layer 116 that is surrounded by the steel cap 115. When the steel cap 115 is heated by the induction element, the thermally conductive material 116 preferentially draws the heat into the interior bottom 111 (warming the food stuffs contained therein) minimizing the heating of the sidewalls portion 120 that are covered with the non-stick coating 150a that is adjacent to the steel cap 115. Further, it should be appreciated that even if the non-stick coating could survive the cooking temperature that the bottom of the cookware article is exposed to, it is still preferable to deploy a stainless steel cap on the bottom. While a protective coating might be easily scratched off a bottom surface from the repeated abrasion with a cooking element burner or grid like support, the stainless steel cap needs no such protective coating as it is inherently resistant to dishwashing detergents.

In the preferred embodiments, the thermally conductive material 116 consists substantially of at least one of copper or aluminium, as well as a combination of these materials as either an alloy or a plurality of different layers. When aluminium is used as the thermally conductive material 116 the thickness is preferably from about 1 mm to about 10 mm, but more preferably at least about 2 mm, while also being generally less than about 7 mm.

The fluid containing portion of cookware vessel 100 is a prefabricated aluminium shell 130 having a bottom portion surrounded by substantially vertically extending sidewalls. The thickness of the aluminium that comprises shell 130 is preferably from about 2 mm to about 5 mm. It will be appreciated that when an aluminium plate is used to form the principle thermal mass 116, the aluminium plate is preferably least as thick as the aluminium that comprises the shell 130 such that the ratio of the total bottom thickness (that is, the aluminium shell thickness plus the plate thickness) is at least two times the aluminium wall thickness. It is more preferable that the ratio of the total bottom thickness is at least three times the wall thickness.

A preferred method of fabricating the combination of the aluminium shell 130 having thermally conductive bottom layer 116 that is covered with a steel cap 115 is disclosed in GB Patent Application No. 9800516.8, published July 14, 1999, which is incorporated herein by reference. The thermally conductive material 116 is prefabricated to conform substantially to the diameter of the bottom of the preformed aluminium cookware vessel 130. The steel cap 115 is initially a round flat disc that is joined to the aluminium shell 130 as the plate of thermally conductive material 116 is laminated between them. Such lamination preferably occurs in a single step of impact bonding, wherein the impact bonding die deforms the edges of the plate to form side 115b. When the plate is aluminium, the components are heated to a temperature of about 450 °C prior to the single impact used to bond them into an integral unit. Alternatively, the structures in FIG. 1 to 5 may be laminated together in multiple steps, which may include at least one brazing operation.

Alternatively, the cap 115 can be formed of a 2-play cladding of stainless steel and aluminium sheet. Such a cladding material can be cut into a round sheet and then deformed into a cap shape, that is, having a slightly upright wall to receive the aluminium pan bottom. It should be appreciated that it is preferable to use a ferromagnetic grade of stainless steel for such cladding so that the cookware is suitable for induction cooking, however other ferromagnetic alloys may be suitable for use as the cladding or included within the bottom assembly of the thermally conductive material 116 with or without a cap 115.

FIG. 2 is an embodiment of the invention in which the exposed outer surfaces of the aluminium shell 130 have an anodized aluminium coating or finish 140 consisting substantially of aluminium oxide or alumina. The organic non-stick coating 150 covers the anodized aluminium finishes 140.

The anodizing process that forms alumina layer 140 can be carried out before the bonding or lamination process described above, provided the portion of the aluminium vessel 130 that bonds with the thermally conductive material is masked to prevent its anodizing before lamination. Alternatively, the anodizing process that forms alumina layer 140 may be conducted after the lamination process described with respect to FIG. 2, provided the steel cap 116 is to be masked to prevent its degradation in the acid anodizing bath.

The non-stick coating 150 not only facilitates clean up after use but protects the anodized finish from dishwasher detergents. The potential for overheating, and thus degrading, the non-stick finish on the exterior of the cookware article 100 is greatly reduced due to the inclusion of the thermally conductive layer 116 that is surrounded by the steel cap 115. When the steel cap 115 is heated by the induction element, the thermally conductive material 116 preferentially draws the heat into the interior bottom 111 (warming the food stuffs contained therein) minimizing the heating of the sidewalls portion 120 that are covered with the non-stick coating 150 and adjacent the steel cap 115.

It should also be appreciated that the cap also effectively raises the lower edge of sidewall 120 upward away from the electric bum element or flame during cooking thus minimizing the direct heating there from.

The non-stick coating 150 is preferably applied to the cookware article 100 after the process of fabrication that includes the bonding of the thermally conductive element 116 and the steel cap 115. The steel cap 115 is masked to prevent its coating with the non-stick finish. Non-stick coatings include flourocarbon based polymers, as well as siloxane based polymers, such as a silicon polyester resin. Suitable fluorocarbon polymers may include PTFE (Polytetrafluoroethylene), FEP (Fluorinated Ethylene Propylene), and PFA (Perfluoroalkoxy). Such polymers are generally applied as multiple coating layers of which at least some contain inorganic filler for reinforcement.

It should be appreciated by one of ordinary skill in the art that the cap 115 and thermally conductive material 116 can be other materials and constructions, although it is preferred that at least one of the cap and the thermally conductive material be or include a layer of a magnetic material for the broadest compatibility with induction range tops.

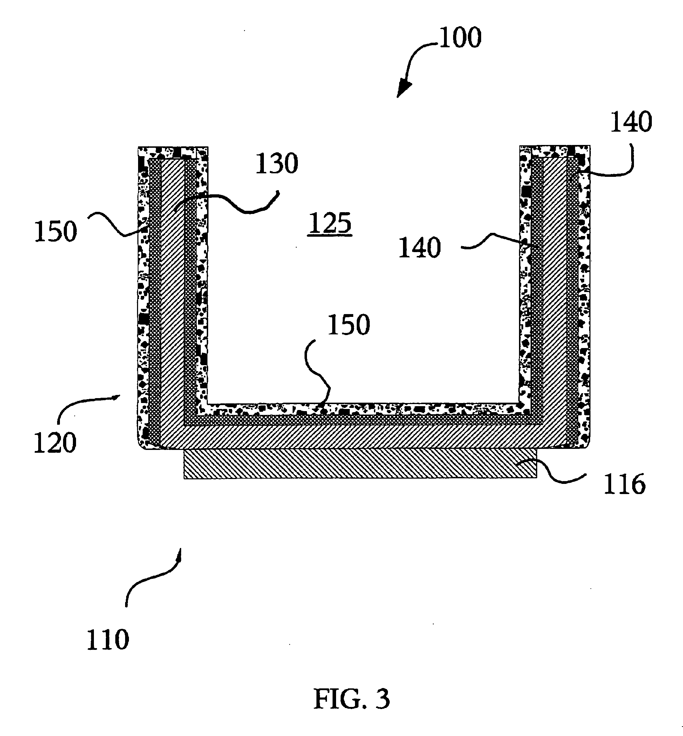

For example, FIG. 3 shows an alternative embodiment in which the steel cap does not surround the thermally conductive material 116.

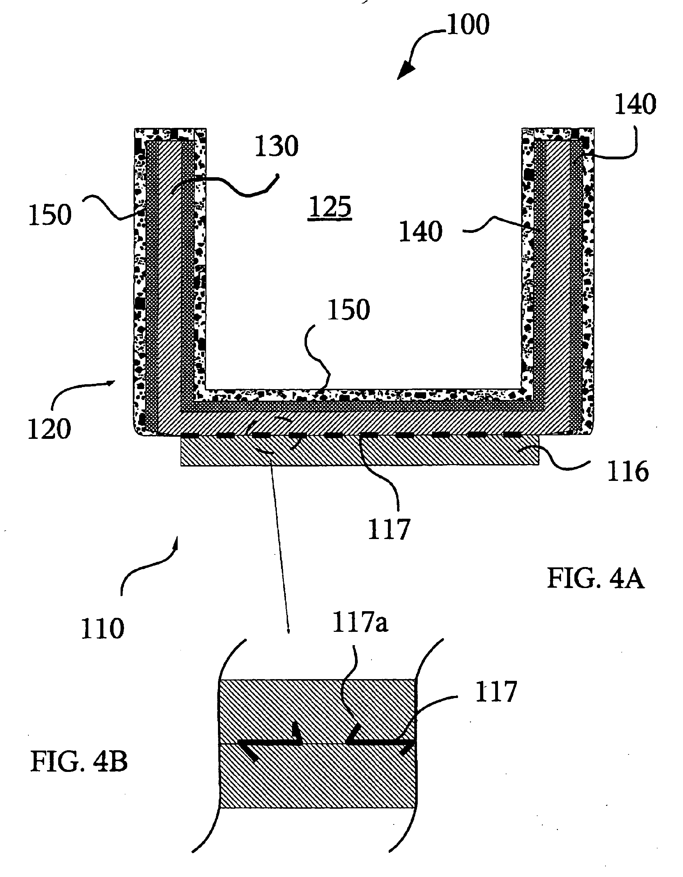

FIG. 4A shows another alternative embodiment in which the steel cap does not surround the thermally conductive material 116, but at least one layer 117 of a magnetic material or alloy, such as stainless steel, is bonded to both the bottom of shell 130 and thermally conductive material 116. In this embodiment layer 117 is a perforated sheet or grate such that the aluminium from the shell and the plate 116 surrounded by the cap 115 readily bond together. Such a grate optionally includes perforated metal portions that extend upward and downward from alternating holes so as to mechanically lock into the softer aluminium metal during bonding at lower temperatures. Such a structure of the grate 117 is illustrated in FIG. 4B. Each hole or opening in the grating preferably has an attached sharp punched protrusion 117a that initially points normal to the grating but folds inward to penetrate the adjacent aluminium layers 116 and 115, causing a mechanical locking therein as the aluminium deforms to accommodate the penetration.

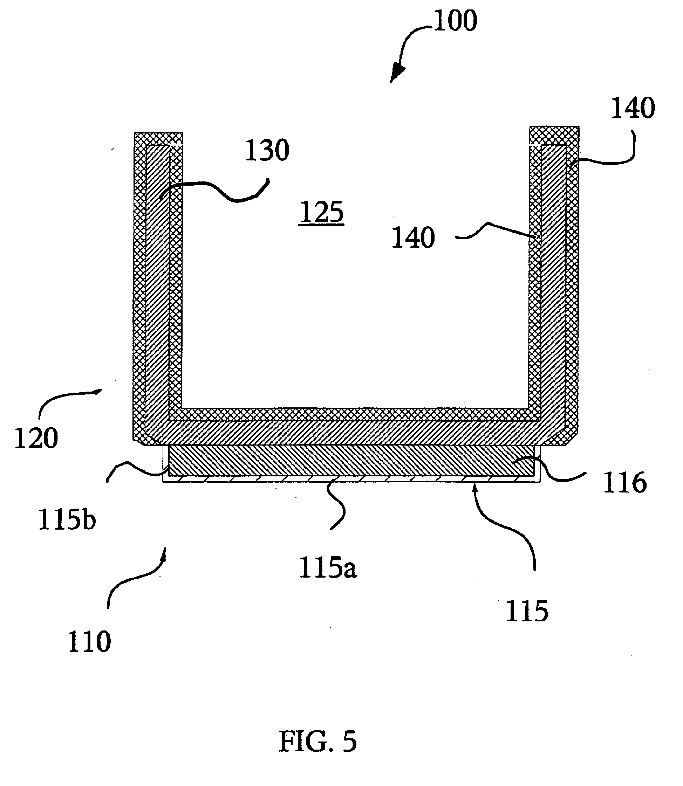

FIG. 5 shows another alternative embodiment in which the exposed outer surfaces of the aluminium shell 130 have an anodized aluminium coating or finish 140 consisting substantially of aluminium oxide or alumina.

It should also be understood that the thermally conductive material 116 might include sub-layers of other ferroelectric materials to optimize the effectiveness as a receptor of energy in induction cooking, as is generally taught in U.S. Patent 4,596,236, which is incorporated herein by reference. Such sub-layers can be either continuous or discrete sub-layers. Further, such sub-layers need not be organized co-planar with the bottom exterior and interior cooking surfaces. For example, such sub-layers might be organized as a plurality of grooves or strips inclined with respect to the exterior and interior cooking surface, as is generally taught in U.S. Patent 4,544,818, which is incorporated herein by reference

It is further contemplated that the stainless steel or other cap 115 that contains at least one ferromagnetic material need not have the same thickness on the bottom 115a and sidewalls 115b, but may have a thicker sidewall portion 115b to act as a thermal insulator from the upstanding sidewalls of the pan with respect to the principle thermal mass that it surrounds.

In summary of the most preferred embodiments, many objectives of the invention are met by anodizing the portion of the aluminium cookware article that is not protected by the steel base, and more preferably, by also coating the anodized surface of the cookware article with a non-stick coating, as described with respect to FIG. 3. The non-stick coating 150 renders the anodized surface 140 dishwasher safe. Further, as the steel base 115 and encapsulated aluminium plate 116 conduct heat away from the burner or range (be it a radiant heating element, a flame or induction coil) when the pan contains foodstuffs the anodized surfaces will generally not heat up sufficiently to damage the non-stick coating on the exterior of the cooking vessel.

It should be further appreciated that the thermally conductive material 116 need not be monolithic but may include sub-layers of other materials that are more thermally conductive, such as one or more continuous or discrete sub-layers of copper in an aluminium sheet, as is generally taught in US patent 5,952,112, which is incorporated herein by reference. Such sub-layers can be either continuous or discrete sub-layers.

## Claims

1. An article of cookware (100) comprising:
a) an aluminium shell (130) having a bottom cooking surface and surrounding sidewalls extending substantially upward therefrom to define a fluid retaining cavity having an interior surface and an exterior surface,
b) a plate of thermally conductive material (116) that comprises aluminium bonded to the exterior of the bottom cooking surface, said thermally conductive material being at least as thermally conductive as the material that forms said shell, and
c) a stainless steel cap (115) disposed in thermal communication and surrounding said plate of thermally conductive material (116), the edge of said cap extending to the exterior of the bottom cooking surface, the article of cookware being **characterized in that** the interior surface and exterior surface of the aluminium shell not covered by the stainless steel cap is anodized; the article of cookware being further **characterized by**
d) an organic coating (150) substantially covering the anodized interior surface and exterior surface of the aluminium shell (130) not covered by the stainless steel cap and not covered by said plate of thermally conductive material (116).

2. An article of cookware according to claim 1 wherein said organic coating (150) is a protective non-stick coating.

3. An article of cookware according to claim 1 or 2 wherein the stainless steel that comprises said cap (115) has a thickness of less than about 1 mm.

4. An article of cookware according to any of claims 1 to 3 wherein said thermally conductive material consists essentially of aluminium.

5. An article of cookware according to claims 1 or 4 wherein said thermally conductive aluminium plate (116) surrounded by said cap (115) has a thickness of at least about 2 mm.

6. An article of cookware according to claims 1 or 4 wherein said thermally conductive aluminium plate (116) surrounded by said cap (115) has a thickness of at least about 5 mm.

7. An article of cookware according to claims 1 or 4 wherein said thermally conductive aluminium plate (116) surrounded by said cap (115) has a thickness of at least about 7 mm.

8. An article of cookware according to claim 1 wherein the combined thickness of said thermally conductive aluminium plate (116) and said aluminium shell (130) at the bottom cooking surface is at least about two times the thickness of said aluminium shell (130).

9. An article of cookware according to claim 1 wherein the combined thickness of said thermally conductive aluminium plate (116) and said aluminium shell (130) at the bottom cooking surface is at least about three times the thickness of said aluminium shell (130).

10. An article of cookware according to any of claims 1 to 9 further comprising at least one layer of a magnetic material (117) beneath the interior bottom cooking surface of said shell (130).

11. An article of cookware according to claim 10 wherein the magnetic material (117) comprises a grating structure.

12. An article of cookware according to claim 11 wherein the grating structure (117) comprises holes and wherein the holes further comprise protrusions that penetrate at least one of the surrounding materials to mechanically interlock therewith.

## Patentansprüche

1. Küchengeschirrartikel (100), umfassend:
a) eine Aluminiumschale (130) mit einer unteren Kochfläche und umgebenden Seitenwänden, die sich im Wesentlichen aufwärts davon erstrecken, um einen Fluid aufnehmenden Hohlraum zu definierten mit einer inneren Fläche und einer äußeren Fläche,
b) eine Platte aus wärmeleitendem Material (116), das Aluminium umfasst, welches an die Außenseite der unteren Kochfläche geschweißt ist, wobei das wärmeleitende Material mindestens so wärmeleitend ist wie das Material, das die Schale bildet, und
c) eine Abdeckung aus Edelstahl (115), die in thermischer Verbindung mit der Platte aus wärmeleitendem Material (116) steht und diese umgibt, wobei sich der Rand der Abdeckung zur Außenseite der unteren Kochfläche hin erstreckt, wobei der Küchengeschirrartikel **dadurch gekennzeichnet ist, dass** die Innenfläche und die Außenfläche der Aluminiumschale, die nicht durch die Abdeckung aus Edelstahl bedeckt sind, eloxiert sind, wobei der Küchengeschirrartikel ferner **gekennzeichnet ist, durch**
d) eine organische Beschichtung (150), die im Wesentlichen die eloxierte Innenfläche und Außenfläche der Aluminiumschale (130) bedeckt, die nicht **durch** die Abdeckung aus Edelstahl und nicht **durch** die Platte aus wärmeleitendem Material (116) bedeckt ist.

2. Küchengeschirrartikel nach Anspruch 1, wobei die organische Beschichtung (150) eine schützende nicht haftende Beschichtung ist.

3. Küchengeschirrartikel nach Anspruch 1 oder 2, wobei der Edelstahl, der die Abdeckung (115) umfasst, eine Dicke von weniger als etwa 1 mm hat.

4. Küchengeschirrartikel nach einem der Ansprüche 1 bis 3, wobei das wärmeleitende Material im Wesentlichen aus Aluminium besteht.

5. Küchengeschirrartikel nach den Ansprüchen 1 oder 4, wobei die von der Abdeckung (115) umgebene wärmeleitende Aluminiumplatte (116), eine Dicke von mindestens etwa 2 mm hat.

6. Küchengeschirrartikel nach den Ansprüchen 1 oder 4, wobei die von der Abdeckung (115) umgebene wärmeleitende Aluminiumplatte (116), eine Dicke von mindestens etwa 5 mm hat.

7. Kochengeschirrartikel nach den Ansprüchen 1 oder 4, wobei die von der Abdeckung (115) umgebene wärmeleitende Aluminiumplatte (116), eine Dicke von mindestens etwa 7 mm hat.

8. Küchengeschirrartikel nach Anspruch 1, wobei die zusammengefassten Dicken der wärmeleitenden Aluminiumplatte (116) und der Aluminiumschale (130) an der unteren Kochfläche mindestens etwa zweimal der Dicke der Aluminiumschale (130) entspricht.

9. Küchengeschirrartikel nach Anspruch 1, wobei die zusammengefassten Dicken der wärmeleitenden Aluminiumplatte (116) und der Aluminiumschale (130) an der unteren Kochfläche mindestens etwa dreimal der Dicke der Aluminiumschale (130) entspricht.

10. Küchengeschrrartikel nach einem der Ansprüche 1 bis 9, ferner umfassend mindestens eine Schicht eines magnetischen Materials (117) unterhalb der inneren unteren Kochfläche der Schale (130).

11. Küchengeschirrartikel nach Anspruch 10, wobei das magnetische Material (117) eine Gitterstruktur umfasst.

12. Küchengeschirrartikel nach Anspruch 11, wobei die Gitterstruktur (117) Löcher umfasst, und wobei die Löcher ferner Vorsprünge umfassen, die mindestens eines der umgebenden Materialien durchdringen, um mechanisch mit ihnen ineinanderzugreifen.

## Revendications

1. Ustensile de cuisine (100), comprenant:
a) une coque en aluminium (130) ayant une surface de fond de cuisson et des parois latérales d'entourage s'étendant substantiellement vers le haut à partir de celle-ci pour définir une cavité de rétention d'un fluide ayant une surface intérieure et une surface extérieure,
b) une plaque de matériau thermo-conducteur (116) qui comprend de l'aluminium lié à l'extérieur de la surface de fond de cuisson (116), ledit matériau thermo-conducteur étant au moins aussi thermo-conducteur que le matériau formant la coque, et
c) une chape en acier inoxydable (115), disposée en communication thermique avec et entourant ladite plaque de matériau thcrmo-conducteur (116), le bord de ladite chape s'étendant vers l'extérieur de la surface de cuisson du fond, l'ustensile de cuisine étant **caractérisé en ce que** la surface intérieure et la surface extérieure de la coque d'aluminium qui n'est pas recouverte par la chape en acier inoxydable est anodisée; l'article de cuisine étant en outre **caractérisé par**
d) une couche de revêtement organique (150) recouvrant substantiellement la surface intérieure et la surface extérieure anodisées de la coque d'aluminium (130) non recouverte par la chape en acier inoxydable et non recouverte par ladite plaque de matériau thermo-conducteur (116).

2. Ustensile de cuisine selon la revendication 1, dans lequel ladite couche de revêtement organique (150) est une couche de revêtement de protection antiadhésive.

3. Ustensile de cuisine selon la revendication 1 ou 2, dans laquelle l'acier inoxydable comprenant ladite chape (115) a une épaisseur de moins de 1 mm environ

4. Ustensile de cuisine selon l'une quelconque des revendications 1 à 3, dans lequel ledit matériau thermo-conducteur est constitué essentiellement d'aluminium.

5. Ustensile de cuisine selon les revendications 1 ou 4, dans lequel ladite plaque en aluminium thermo-conductrice (116) entouré par ladite chape (115) a une épaisseur d'au moins 2 mm environ.

6. Ustensile selon les revendications 1 ou 4, dans lequel ladite plaque d'aluminium thermo-conductrice (116) entourée par ladite chape (115) a une épaisseur d'au moins 5 mm environ.

7. Ustensile de cuisine selon les revendications 1 ou 4, dans lequel ladite plaque d'aluminium thermo-conductrice (116) entourée par ladite chape (115) a une épaisseur d'au moins 7 mm environ.

8. Ustensile de cuisine selon la revendication 1, dans lequel l'épaisseur combinée de ladite plaque d'aluminium thermo-conductrice (116) et de ladite coque d'aluminium (130) au niveau de la surface de fond de cuisson représente au moins environ deux fois l'épaisseur de ladite coque d'aluminium (130).

9. Ustensile de cuisine selon la revendication 1, dans lequel l'épaisseur combinée de ladite plaque d'aluminium thermo-conductrice (116) et de ladite coque d'aluminium (130) au niveau de la surface de fond de cuisson représente au moins environ 3 fois l'épaisseur de ladite coque d'aluminium (130).

10. Ustensile de cuisine selon l'une quelconque des revendications 1 à 9, comprenant en outre au moins une couche d'un matériau magnétique (117) sous la surface de cuisson interne inférieure (130).

11. Ustensile de cuisine selon la revendication 10, dans lequel le matériau magnétique (117) comprend une structure réticulée.

12. Ustensile de cuisine selon la revendication 11, dans lequel la structure réticulée (117) comprend des trous, les trous comprenant en outre des saillies qui pénètrent au moins un des matériaux voisins afin de s'engager avec ceux-ci de façon mécanique.
